# EUROPEAN PATENT APPLICATION

(11) **EP 4 296 057 A1**
(43) Date of publication of application: **27.12.2023**
(21) Application number: 22756342.6
(22) Date of filing: 22.02.2022
(51) Int. Cl.: B32B 27/32, B32B 1/02, A61J 1/10

(54) **CONTAINER MULTILAYERED BODY, CONTAINER, MEDICAL CONTAINER, AND DRUG-CONTAINING MEDICAL CONTAINER**

(30) Priority: 22.02.2021 JP 2021026286
(71) Applicant: Hosokawa Yoko Co., Ltd., Tokyo 102-0084 (JP)
(72) Inventor: YOSHIKAWA, Katsuyuki, Tokyo 102-0084 (JP); MIYAWAKI, Ryosuke, Tokyo 102-0084 (JP)
(74) Representative: Krauns, Christian
(86) International application number: PCT/JP2022/007257
(87) International publication number: WO 2022/177025

(57) **Abstract**

The present invention is a container multilayered body (1, 2) that is used to form a container, having an innermost layer (3) made of a cyclic polyolefin, an intermediate layer (4) that is formed so as to be adjacent to the innermost layer (3) and contains a linear low-density polyethylene produced using a single-site catalyst as a main component, and an outer layer (5) made of one of a random polypropylene produced using a single-site catalyst or a polypropylene containing an elastomer.

## Description

### [Technical Field]

The present invention relates to a container multilayered body, a container, a medical container, and a drug-containing medical container. Priority is claimed on Japanese Patent Application No. 2021-026286, filed February 22, 2021, the content of which is incorporated herein by reference.

### [Background Art]

For example, as resin containers for liquid medications that are used in the medical field, there are not only ampoules or syringes but also liquid sticks or infusion bags made of a plastic bottle or a plastic film. Particularly, for infusions or injectable solutions that are directly administered into veins by injections or intravenous drips, infusion bags are in wide use. As resins that are used for these infusion bags, a variety of materials are applied. In a case where a specific drug, for example, a fat-soluble vitamin, is contained in a liquid medicine, which is contents, the use of a cyclic polyolefin layer made of a thermoplastic saturated norbornene-based polymer as a wetted layer (innermost layer) to prevent the adsorption of a drug to the resin is known. Patent Document 1 discloses, as a multilayered body that is used as a container, a multilayered body having an outermost layer made of a high-density polyethylene, an intermediate layer made of a linear low-density polyethylene and an innermost layer made of a cyclic polyethylene.

### [Citation List]

### [Patent Document]

[Patent Document 1]
Japanese Unexamined Patent Application, First Publication No. 2008-18063

### [Summary of Invention]

### [Technical Problem]

It is common to carry out a sterilization treatment such as high-pressure steam sterilization on liquid medications, particularly, infusions or injectable solutions, after the accommodation portion of a container is filled with the contents. However, in a case where the temperature distribution in a sterilization kettle is wide, it is forced to set the temperature of the kettle to be high to satisfy sterilization conditions even in a portion with a relatively low temperature and to guarantee the sterilization of all products. In such a case, some conventional containers as in Patent Document 1 have heat resistance that is not high enough to carry out a high-temperature sterilization treatment. Therefore, in a place with a high temperature in the kettle, sometimes, there is a disadvantage in that delamination occurs easily due to a decrease in the interlayer strength, the container sticks to a sterilization tray to degrade the appearance or require an effort to peel the container off, the surface of the container is whitened at the time of peeling the container off from the sterilization tray, which impairs the transparency, or the like. In addition, there is also a possibility that, due to heat during sterilization, the container may shrink, which may generate wrinkles or cause deformation and degrade the appearance or impair the transparency.

An objective of the present invention is to provide a container multilayered body that has excellent heat resistance and is capable of suppressing a disadvantage during a sterilization treatment and a container, a medical container and a drug-containing medical container in which the container multilayered body is used.

### [Solution to Problem]

The present invention has the following aspects.

A first aspect of the present invention is a container multilayered body that is used to form a container, having an innermost layer made of a cyclic polyolefin, an intermediate layer that is formed so as to be adjacent to the innermost layer and contains a linear low-density polyethylene produced using a single-site catalyst as a main component, and an outer layer made of one of a random polypropylene produced using a single-site catalyst or a polypropylene containing an elastomer.

A second aspect of the present invention is the container multilayered body according to the first aspect having an outermost layer made of a polypropylene on an outer side of the outer layer.

A third aspect of the present invention is the container multilayered body according to the first aspect or the second aspect, in which the cyclic polyolefin is a hydrogenated product of a ring-opened polymer of a cyclic olefin monomer.

A fourth aspect of the present invention is the container multilayered body according to any one of the first aspect to the third aspect, in which the elastomer is an olefin-based elastomer or/and a styrene-based elastomer.

A fifth aspect of the present invention is a container including an accommodation portion that accommodates contents, in which at least the accommodation portion is made of the container multilayered body according to any one of the first aspect to the fourth aspect.

A sixth aspect of the present invention is a medical container including an accommodation portion that accommodates a liquid medicine, in which at least the accommodation portion is made of the container multilayered body according to any one of the first aspect to the fourth aspect.

A seventh aspect of the present invention is a drug-containing medical container, in which a medicine is accommodated in the medical container according to the sixth aspect.

In the present application, the concept of a container includes not only containers having stiffness but also packaging composed of a film or the like.

### [Advantageous Effects of Invention]

According to the present invention, it is possible to provide a container multilayered body that has excellent heat resistance and is capable of suppressing a disadvantage during a sterilization treatment and a container, particularly, a medical container and a drug-containing medical container, in which the container multilayered body is used. Hereinafter, a medical container multilayered body will be mainly described.

### [Brief Description of Drawings]

FIG. 1 is a cross-sectional view showing a container multilayered body of an embodiment.
FIG. 2 is a cross-sectional view showing a container multilayered body of another embodiment.
FIG. 3 is views showing a medical container of an embodiment, (A) of FIG. 3 is a plan view, and (B) of FIG. 3 is a cross-sectional view along I-I' in (A) of FIG. 3.
FIG. 4 is views showing a medical container of another embodiment, (A) of FIG. 4 is a plan view, and (B) of FIG. 4 is a plan view showing a different aspect of a port portion.
FIG. 5 is views showing a film formed product that is used to manufacture the medical container of FIG. 4, (A) of FIG. 5 is a front view, and (B) of FIG. 5 is a side view.
FIG. 6 is a plan view showing a medical container of still another embodiment.
FIG. 7 is a plan view showing a multi-chamber medical container that is an example of a medical container of far still another embodiment.

### [Description of Embodiments]

### [Container multilayered body]

A container multilayered body of the present invention (hereinafter, also simply referred to as "multilayered body") is a multilayered body that is used to form a container. The multilayered body of the present invention is suitably used to form particularly an accommodation portion that accommodates liquid medicines in medical containers. The multilayered body of the present invention has at least an innermost layer to be described below, an intermediate layer that is formed so as to be adjacent to the innermost layer and an outer layer.

Hereinafter, an example of the multilayered body of the present invention will be shown and described. The dimensions and the like of drawings to be exemplified in the following description are simply examples. The present invention is not necessarily limited to them and can be appropriately modified and carried out within the scope of the gist of the present invention.

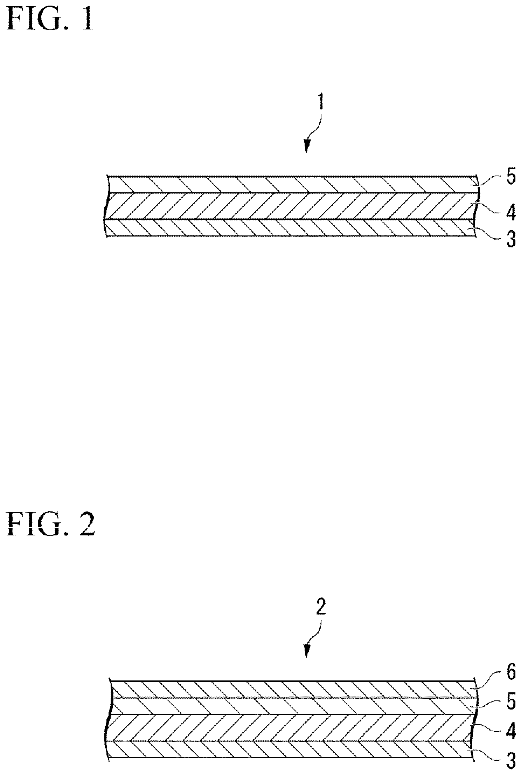

As the multilayered body of the present invention, for example, a container multilayered body 1 shown in FIG. 1 (hereinafter, also referred to as "multilayered body 1") and a container multilayered body 2 shown in FIG. 2 (hereinafter, also referred to as "multilayered body 2") can be exemplified.

The multilayered body 1 is, as shown in FIG. 1, a multilayered body of a three-layer configuration made up of an innermost layer 3, an intermediate layer 4 and an outer layer 5. In the multilayered body 1, the innermost layer 3, the intermediate layer 4 and the outer layer 5 are laminated in this order. The multilayered body 2 is, as shown in FIG. 2, a multilayered body of a four-layer configuration made up of an innermost layer 3, an intermediate layer 4, an outer layer 5 and an outermost layer 6. In the multilayered body 2, the innermost layer 3, the intermediate layer 4, the outer layer 5 and the outermost layer 6 are laminated in this order.

### (Innermost layer)

The innermost layer 6 is a layer that is disposed on the innermost side at the time of forming a container and is in contact with contents (wetted layer) and is made of a cyclic polyolefin. The cyclic polyolefin adsorbs or absorbs a drug only to a small extent and is thus capable of suppressing the titer reduction of the drug when the contents are a medicine. In addition, the cyclic polyolefin is excellent in terms of heat resistance and transparency and is thus suitable for containers for medical uses which require high-temperature sterilization and desirably enable the contents to be seen from the outside.

As the cyclic polyolefin, for example, ring-opened polymers of a cyclic olefin monomer, hydrogenated products of a ring-opened polymer of a cyclic olefin monomer, addition polymers of a cyclic olefin monomer and addition copolymers of a cyclic olefin monomer and a different copolymerizable monomer can be exemplified. As the cyclic polyolefin, a hydrogenated product of a ring-opened polymer of a cyclic olefin monomer is preferable from the viewpoint of excellent heat resistance. The innermost layer may be formed of one cyclic polyolefin or two or more cyclic polyolefins.

The cyclic olefin monomer is not particularly limited, and, for example, norbornene-based monomers and monocyclic cyclic olefin monomers can be exemplified. The norbornene-based monomer is a monomer having a unit derived from a norbornene structure in the monomer structure, and, for example, bicyclo[2.2.1]hept-2-ene, tricyclo[4.3.0.12,5]deca-3,7-diene, 7,8-benzotricyclo[4.3.0.12,5]deca-3-ene and tetracyclo[4.4.0.12,5.17,10]dodeca-3-ene can be exemplified. As the monocyclic cyclic olefin monomers, for example, cyclohexene, cycloheptene and cyclooctene can be exemplified. One kind of cyclic olefin monomer may be singly used or two or more kinds of cyclic olefin monomers may be jointly used.

As the different monomer that is addition-copolymerizable with the cyclic olefin monomer, for example, α-olefins having 2 to 20 carbon atoms such as ethylene, propylene, 1-butene and 1-hexene can be exemplified. One different monomer may be singly used or two or more different monomers may be jointly used.

The ring-opened polymer of a cyclic olefin monomer can be obtained by polymerizing a cyclic olefin monomer by a metathesis reaction in the presence of a ring-opening polymerization catalyst. The hydrogenated product of a ring-opened polymer of a cyclic olefin monomer can be obtained by hydrogenating a ring-opened polymer with a well-known hydrogenation catalyst. The addition polymer and the addition copolymer of a cyclic olefin monomer can be obtained by polymerization using a catalyst made of a well-known titanium or zirconium compound and an organic aluminum compound.

As commercially available products of the addition polymer and the addition copolymer of a cyclic olefin monomer, for example, APEL (registered trademark) manufactured by Mitsui Chemicals, Inc. and TOPAS (registered trademark) manufactured by Polyplastics Co., Ltd. can be exemplified. As the hydrogenated product of a ring-opened polymer of a cyclic olefin monomer, for example, ZEONOR (registered trademark) and ZEONEX (registered trademark) manufactured by ZEON Corporation can be exemplified.

The glass transition temperature (hereinafter, also referred to as "Tg") of the cyclic polyolefin is preferably 70°C to 180°C and more preferably 100°C to 140°C. When the Tg is equal to or higher than the lower limit value of the above-described range, the heat resistance of a container is excellent. When the Tg is equal to or lower than the upper limit value of the above-described range, the formability and heat-sealing property of the multilayered body are excellent. The Tg is a value that is measured by differential scanning calorimetry (DSC) according to JIS K 7121.

As the cyclic polyolefin, two or more cyclic polyolefins having a different Tg may be mixed together. This is because the mixing makes it possible to set an appropriate molding temperature at the time of co-extruding the multilayered body 1 or 2 and has an effect of improving forming stability. For example, when a cyclic polyolefin having a Tg of 100°C and a cyclic polyolefin having a Tg of 136°C are mixed together in a ratio of 1:1, the Tg is within a range of 113°C to 118°C, and extrusion at a molding temperature of approximately 250°C becomes possible. At this temperature, forming stability is retained while the temperature does not significantly deviate from the optimal molding temperatures of the intermediate layer 4, the outer layer 5 and the outermost layer 6, which are adjacent to each other. When the Tg of the mixture is significantly decreased, there is a possibility that the cyclic polyolefin layer, which is an inner layer, may soften at the time of high-pressure steam sterilization and a bag may break during sterilization, and thus it is preferable to set the Tg of the mixture in consideration of both cyclic polyolefins having a different Tg.

In addition, in a case where the Tg of the cyclic polyolefin layer, which is an inner layer, is higher than the Tg or melting point of a resin that is used for the outer layer 5 or the outermost layer 6, in a bag-making process, the heat-sealing temperature is set to be so high that the cyclic polyolefin can melt or soften and a bag can be made. This makes excess heat also apply to the outer layer 5 or the outermost layer 6, which leads to a poor appearance of a container. Therefore, the Tg of the cyclic polyolefin layer, which is an inner layer, being higher than the Tg or melting point of the resin that is used for the outer layer 5 or the outermost layer 6 is not preferable.

The innermost layer 3 may contain a variety of additives that are commonly used in the resin field such as an antistatic agent, an antioxidant, a lubricant, an anti-fogging agent, an ultraviolet absorber and a neutralizer to an extent that the effect of the present invention is not impaired.

### (Intermediate layer)

The intermediate layer 4 is a layer that is formed so as to be adjacent to the innermost layer 3 and contains a linear low-density polyethylene produced using a single-site catalyst (hereinafter, also referred to as "single-site LLDPE") as a main component. Here, containing the single-site LLDPE as a main component means that the content of the single-site LLDPE in the intermediate layer 4 is 50 mass% or more with respect to the total mass of the intermediate layer 4.

The single-site LLDPE has excellent adhesion to cyclic polyolefins, and the adhesion does not deteriorate significantly even after high-pressure steam sterilization. Therefore, the intermediate layer 4 makes it possible to make the innermost layer 3 made of the cyclic polyolefin stably adhere to a layer on the outside.

The single-site catalyst is not particularly limited, and, for example, a metallocene catalyst can be exemplified.

The density of the single-site LLDPE is preferably 0.860 g/cm³ or higher and lower than 0.940 g/cm³ and more preferably 0.890 to 0.924 g/cm³. When the density of the single-site LLDPE is equal to or higher than the lower limit value, the heat resistance is excellent, and it is easy to suppress a decrease in the peel strength between the intermediate layer 4 and the innermost layer 3. When the density of the single-site LLDPE is lower than the upper limit value, it is easy to suppress the degradation of the transparency or impact resistance of a container.

As the single-site LLDPE, two or more LLDPEs having a different density may be jointly used.

The intermediate layer 4 may contain a different resin other than the single-site LLDPE to an extent that the adhesion to the innermost layer 3 is not impaired. As the different resin, a polyethylene and a cyclic polyolefin can be exemplified, and a high-density polyethylene (hereinafter, also referred to as "HDPE") is preferable.

The content of the single-site LLDPE in the intermediate layer 4 is 50 mass% or more with respect to the total mass of the intermediate layer 4 and is preferably 65 mass% or more and more preferably 80 mass% or more from the viewpoint of excellent flexibility.

Since the heat resistance improves, the degradation of the adhesion of the intermediate layer 4 due to high-pressure steam sterilization is further suppressed, and the shrinkage of the intermediate layer 4 also becomes small, it is preferable that the intermediate layer 4 further contains an HPDE having a higher density than the single-site LLDPE within a range of 30 mass% or less, more preferably within a range of 25 mass% or less, with respect to the total mass of the intermediate layer 4. This has an effect of improving the forming stability and also has an effect of making the occurrence of thermal deformation or the generation of wrinkles less likely at the time of using the multilayered body for a container.

The intermediate layer 4 may contain a variety of additives that are commonly used in the resin field such as an antistatic agent, an antioxidant, a lubricant, an anti-fogging agent, an ultraviolet absorber and a neutralizer to an extent that the effect of the present invention is not impaired.

### (Outer layer)

The outer layer 5 is a layer that is formed so as to be positioned on the outermost side in a container in a case where the outermost layer 6, which will be described below, is not provided and is formed so as to be adjacent to the inside of the outermost layer in a case where the outermost layer is provided. The outer layer 5 is made of one of a random polypropylene produced using a single-site catalyst (hereinafter, also referred to as "single-site random PP") or a polypropylene containing an elastomer (hereinafter, also referred to as "flexible PP").

The single-site random PP is obtained by randomly copolymerizing a polypropylene and ethylene using a single-site catalyst and has a configuration unit based on the polypropylene (hereinafter, also referred to as "polypropylene unit") and a configuration unit based on the ethylene (hereinafter, also referred to as "ethylene unit"). The single-site random PP is a polymer having a high molecular weight and a narrow molecular weight distribution and is thus excellent in terms of adhesion to the intermediate layer 4.

The content rate of the ethylene unit in the single-site random PP is preferably 0.3 to 7 mass% and more preferably 1.7 to 5.5 mass% with respect to all configuration units. When the content rate of the ethylene unit is equal to or more than the lower limit value of the above-described range, the flexibility is sufficient, and thermal adhesion between the outer layer 5 and the intermediate layer 4 is excellent. When the content rate of the ethylene unit is equal to or less than the upper limit value of the above-described range, the heat resistance is excellent.

The flexible PP contains an elastomer and is thus excellent in terms of thermal adhesion to the intermediate layer 4.

As the elastomer, for example, olefin-based elastomers, styrene-based elastomers and polybutadiene-based elastomers can be exemplified. Among these, as an elastomer having relatively high compatibility with PP, which serves as the matrix, and also having adhesion to LLDPE, any of an olefin-based elastomer, a styrene-based elastomer and a mixture of an olefin-based elastomer and a styrene-based elastomer is preferable. More specifically, an ethylene-propylene copolymer, an ethylene-butene copolymer, a styrene-butadiene copolymer, a hydrogenated styrene-butadiene copolymer or the like is preferable. One kind of elastomer or two or more kinds of elastomers may be contained in the flexible PP.

The content of the elastomer in the flexible PP is preferably 20 to 60 mass% and more preferably 20 to 40 mass% with respect to the total mass of the flexible PP. When the content of the elastomer is equal to or more than the lower limit value of the above-described range, thermal adhesion to the intermediate layer 4 is excellent. When the content of the elastomer is equal to or less than the upper limit value of the above-described range, the heat resistance is excellent.

The outer layer 5 may contain a variety of additives that are commonly used in the resin field such as an antistatic agent, an antioxidant, a lubricant, an anti-fogging agent, an ultraviolet absorber and a neutralizer to an extent that the effect of the present invention is not impaired.

### (Outermost layer)

The outermost layer 6 is made of a polypropylene (PP).

PP in the outermost layer 6 may be PP produced using a single-site catalyst or may be PP produced using a catalyst other than the single-site catalyst. PP for which a Ziegler-Natta catalyst is used or the like is an exemplary example. PP in the outermost layer 6 is preferably a homopolymer of propylene, but may be a copolymer having the ethylene unit or the like as long as the content thereof is too small to affect the heat resistance, for example, approximately 5 mass% or less. In addition, PP in the outermost layer may also contain a styrene-based elastomer such as a styrene-butadiene copolymer or a hydrogenated styrene-butadiene copolymer.

The outermost layer may contain a variety of additives that are commonly used in the resin field such as an antistatic agent, an antioxidant, a lubricant, an anti-fogging agent, an ultraviolet absorber and a neutralizer to an extent that the effect of the present invention is not impaired.

### (Thickness)

The total thickness of the multilayered body 1 or 2 of the present invention is not particularly limited and can be set to, for example, 60 to 1000 µm. The total thickness is preferably 100 to 600 µm and more preferably 100 to 400 µm from the viewpoint of the flexibility or strength of the multilayered body 1 or 2.

The thickness of each layer is also not particularly limited.

The thickness of the innermost layer 3 is preferably 5 to 100 µm. When the thickness of the innermost layer 3 is equal to or more than the lower limit value, it becomes difficult for contents such as a drug to be accommodated or the like to be adsorbed thereto. When the thickness of the innermost layer 3 is equal to or less than the upper limit value, the flexibility of the multilayered body 1 or 2 is excellent, and the heat-sealing property is excellent at the time of forming a container from the multilayered body 1 or 2.

The thickness of the intermediate layer 4 needs to be set depending on the thicknesses of the innermost layer 3, the outer layer 5 and the outermost layer 6 so that the total thickness is within the above-described range and can be set to, for example, 50 to 300 µm.

The thickness of the outer layer 5 is preferably 5 to 100 µm. When the thickness of the outer layer 5 is equal to or more than the lower limit value, the heat resistance is excellent. When the thickness of the outer layer 5 is equal to or less than the upper limit value, the flexibility of an entire infusion bag is excellent.

The thickness of the outermost layer 6 is preferably 5 to 100 µm. When the thickness of the outermost layer 6 is equal to or more than the lower limit value, the heat resistance is excellent. When the thickness of the outermost layer 6 is equal to or less than the upper limit value, the flexibility of an entire infusion bag is excellent.

In a multilayered body of a three-layer configuration like the multilayered body 1, the balance of flexibility, heat resistance or the like is particularly favorable, for example, in a case where the fractions of the thicknesses of the innermost layer 3, the intermediate layer 4 and the outer layer 5 are set to 10 to 20:210 to 220: 20.

In a multilayered body of a four-layer configuration like the multilayered body 2, the balance of flexibility, heat resistance or the like is particularly favorable, for example, in a case where the fractions of the thicknesses of the innermost layer 3, the intermediate layer 4, the outer layer 5 and the outermost layer 6 are 10 to 20:190 to 200: 20:20.

The multilayered body of the present invention is not limited to a three-layer structure such as the multilayered body 1 or a four-layer structure such as the multilayered body 2. For example, one or more different layers may be provided between the intermediate layer 4 and the outer layer 5 to an extent that the effect of the present invention is not impaired. As the different layers, for example, a gas barrier resin layer such as an ethylene-vinyl alcohol copolymer, an adhesive resin layer such as an ethylene-vinyl acetate copolymer, an ultraviolet-shielding layer such as a polyolefin resin containing iron oxide and an oxygen-absorbing layer made up of a polyamide resin such as MXD nylon and a cobalt salt can be exemplified.

A method for manufacturing the multilayered body of the present invention is not particularly limited. A well-known multilayer extrusion method can be employed. Specifically, for example, a multilayer T-die extrusion forming method, a multilayer inflation method and a multilayer blow molding method can be exemplified.

### (Action and effect)

As described above, the multilayered bodies 1 and 2 of the present invention include the innermost layer 3 made of the cyclic polyolefin, the intermediate layer 4 containing the single-site LLDPE as a main component and the outer layer 5 made of one of the single-site random PP or the flexible PP. The single-site LLDPE is excellent in terms of adhesion to the cyclic polyolefin and is also excellent in terms of adhesion to the single-site random PP or the flexible PP. Therefore, in the multilayered bodies 1 and 2 of the present invention, the interlayer strength of each of the innermost layer 3, the intermediate layer 4 and the outer layer 5 is high, and a decrease in the interlayer strength due to a sterilization treatment is also suppressed. This is considered to be because, in LLDPE or PP produced using the single-site catalyst, a low-molecular-weight component, which impairs interlayer adhesion, has been reduced.

In addition, since the use of the single-site random PP or the flexible PP for the outer layer 5 makes it possible to increase the melting point of the outer layer 5 while retaining the interlayer strength high, the heat resistance improves. Therefore, even in a sterilization treatment where the kettle temperature is high, a container is less likely to stick to a sterilization tray, and the generation of a disadvantage such as the necessity of an effort for peeling the container off from the sterilization tray or the occurrence of whitening on the surface of the container is suppressed. In addition, during a sterilization treatment, the multilayered bodies 1 and 2 are less likely to shrink due to heat, wrinkles are less likely to be generated, and thus the degradation of the appearance of the container is also suppressed.

Furthermore, the outermost layer 6 made of PP is further provided on the outside of the outer layer 5, whereby the heat resistance of the outside of the multilayered body 2 can be further enhanced. Therefore, it is possible to further suppress the sticking of the container to the sterilization tray during a sterilization treatment or the degradation of the appearance of the container due to the generation of wrinkles. Particularly, in a case where the outer layer 5 containing the flexible PP is provided, the attachment of the elastomer to a heat-sealing bar and the consequent development of stickiness in a bag-making step by heat sealing can be stably suppressed by providing the outermost layer 6 made of PP. Therefore, the multilayered body 2 is less likely to be stuck to the heat-sealing bar during heat sealing, and thus the bag-making speed improves.

### [Container]

A container of the present invention is a container including an accommodation portion 11, 21, 31 or 41 that accommodates contents, and at least the accommodation portion 11, 21, 31 or 41 is made of the multilayered body 1 or 2 of the present invention. The multilayered body 1 or 2 in the container is disposed such that the innermost layer 3 is on the inside of the accommodation portion 11, 21, 31 or 41 and the outer layer 5 and the outermost layer 6 are on the outside. For the container of the present invention, other aspects are not particularly limited as long as at least the accommodation portion 11, 21, 31 or 41 is made of the multilayered body 1 or 2 of the present invention. For example, in the container, aside from the accommodation portion 11, 21, 31 or 41, a hard port portion 12, 22 or 32 that functions as an inlet/outlet of the contents, may be provided. The inlet/outlet of the port portion 12, 22 or 32 is a filling port, which is used to fill the container with the contents at the time of manufacturing, and serves as an outlet through which the contents are removed at the time of use. This port portion 12, 22 or 32 is made by injection molding or the like using the same kind of COP as that for the inner layer. In addition, a tube may be used as the inlet/outlet. The tube is a multilayered tube, and at least a tube outer layer, which is to be heat-sealed with a bag inner layer, is made of the same COP as that for the bag inner layer or PP containing a large amount of an elastomer that is adhesive to COP.

The container of the present invention is particularly useful as a medical container including an accommodation portion that accommodates a liquid medicine. A medical body can be produced by accommodating a medicine in a medical container 10, 20 or 30 for which the multilayered body 1 or 2 of the present invention is used.

The liquid medicine is not particularly limited, and, for example, liquid medicines that are used as infusions such as physiological saline, glucose infusions and amino acid infusions or injectable solutions such as cardiovascular drugs, cerebral protective agents, antibacterial agents, antiemetic agents and plasma derivatives can be exemplified. Particularly, in a case where a fat-soluble drug or the like, for example, a drug such as fat-soluble vitamins, that is easily adsorbed to polyethylene and polypropylene is contained in a liquid medicine, the container is suitable to prevent the adsorption of the drug to resins. Contents that are accommodated in the container of the present invention are not limited to liquid medicines and may be drugs made of the powder of antibiotics or the like.

Hereinafter, as an example of the container of the present invention, embodiments of the medical containers 10, 20 and 30 will be shown and described.

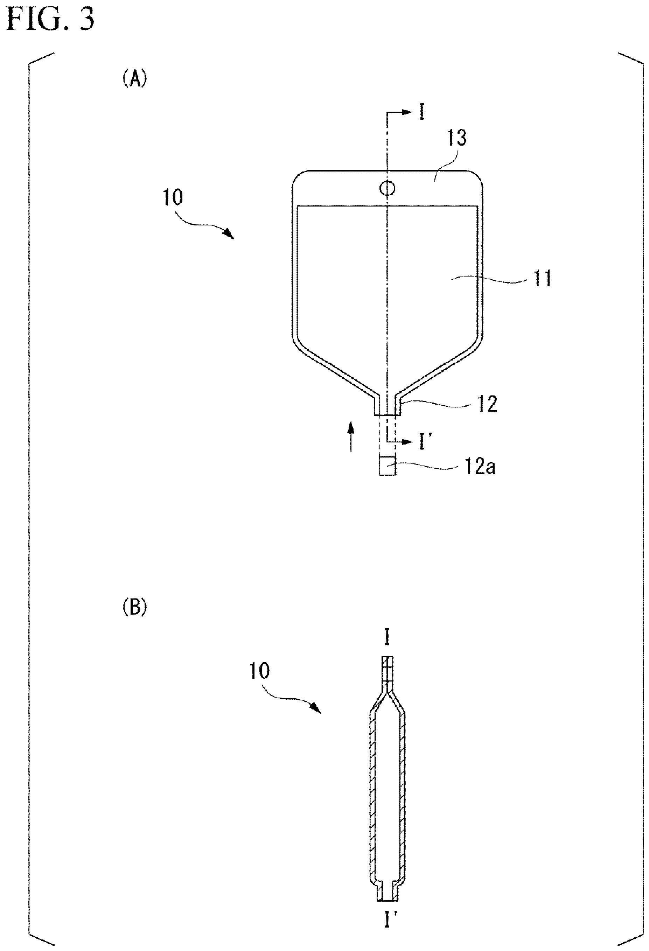

As shown in FIG. 3, the medical container (container) 10 of the embodiment includes the accommodation portion 11 that accommodates contents such as a liquid medicine and the port portion 12 that serves as the inlet/outlet of the contents.

A hanging portion 13 in which a hang hole is formed is provided in the upper portion of the medical container 10 on the accommodation portion 11. The port portion 12 is provided in the lower portion of the accommodation portion 11. The port portion 12 of this example is configured to be sealed by mounting a rubber stopper 12a including a synthetic resin that is fusible with the innermost layer 3 of the multilayered body 1 or 3 provided by an injection molding method on the side surface outer circumferential portion of a cylindrical rubber material through which an injection needle can be penetrated.

The medical container 10 can be manufactured by a normal multilayer blow molding method in which a multilayer blow molding machine is used. That is, a multilayer parison is extruded, the multilayer parison is clamped in a mold, and then a clean air is blown into the multilayer parison. The use of a mold capable of integrally forming the accommodation portion 11 and the port portion 12 as the mold makes it possible to form the medical container 10 made of a hollow blow-formed article. In addition, at the time of clamping the multilayer parison in the mold, a clean air is preliminarily blown into the multilayer passion in advance, and the inside of the mold is put into a negative pressure state through a vacuum hole formed in the mold after the mold is closed. This makes it possible to improve the transfer accuracy of the mold.

As a method for forming the port portion 12, for example, aside from a method in which the port portion is integrally formed with the accommodation portion 41 by a multilayer blow molding method, a method in which a separately-prepared tube member is heat-sealed to the accommodation portion 41 or a method in which a tube member is integrated with the accommodation portion at the same time as the tube member is formed by insert blow molding for inserting the tube member can be exemplified. In the case of using this tube member, aside from a form in which the port portion is sealed by mounting the rubber stopper 22a in the tube member, a form in which the port portion is sealed by loading a rubber stopper into the tube member and then fusing a ring-like lid member and the tube member with ultrasonic waves or the like so that the peripheral portion of the rubber stopper is pressed down with the lid member may also be employed.

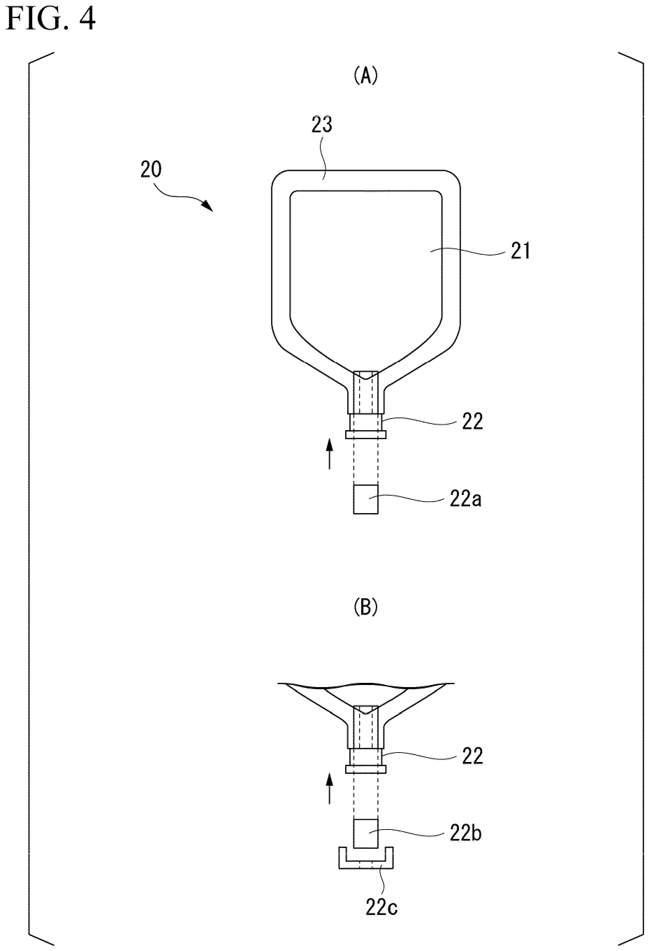

The container of the present invention may be a medical container 20 exemplified in FIG. 4. As shown in (A) of FIG. 4, the medical container 20 includes an accommodation portion 21 formed by hot plate forming (vacuum forming, pressure forming or the like) and a port portion 22 that is made of a tube member and can be sealed by heat-sealing a rubber stopper 22a thereto.

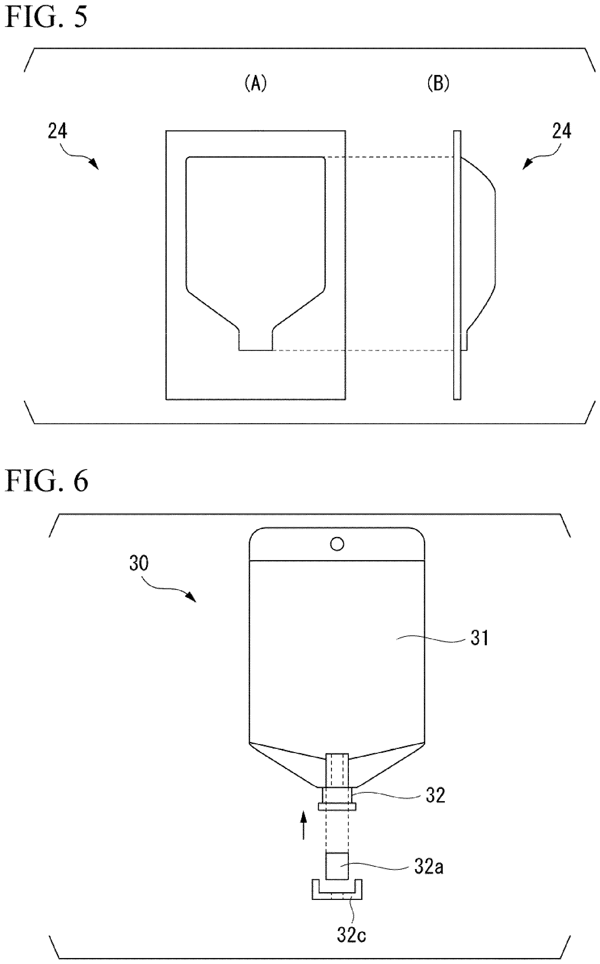

The accommodation portion 21 of the medical container 20 is formed by overlapping two film-formed products 24 each having a recess, which has been obtained by the hot plate forming of the multilayered body 1 or 2 of the present invention, shown in FIG. 5 such that the recesses face each other and heat-sealing peripheral portions 23 while the tube member is disposed at a predetermined position. The formation of the accommodation portion 21 and the formation of the port portion 22 may be carried out by separate steps.

A material of the tube member that forms the port portion 22 is preferably a material that can be liquid-tightly heat-sealed with the accommodation portion 21, and the same cyclic polyolefin as that in the innermost layer 3 of the multilayered body 1 or 2 is preferable since the heat-sealing property with the accommodation portion 21 is favorable. A multilayer material in which a heat-sealable resin is used for the heat-sealing surface of the tube member may also be used.

In the medical container 20, instead of forming the port portion 22 with the tube member and the rubber stopper 22a, as shown in (B) of FIG. 4, the port portion may be formed by loading the rubber stopper 22b into the tube member and then fusing a ring-like lid member 22c and the tube member with ultrasonic waves or the like such that the peripheral portion of the rubber stopper 22b is pressed with the lid member 22c.

The container of the present invention may be a medical container 30 exemplified in FIG. 6. The medical container 30 is a film bag-type container including an accommodation portion 31 obtained by forming a film-like multilayered body 1 or 2 into a bag shape and a port portion 32 made of a tube member. The port portion 32 of this example is blocked with the tube member, a rubber stopper 32a through which an injection needle can be penetrated and a ring-like lid member 32b that presses the peripheral portion of the rubber stopper 32a.

The medical container 30 can be manufactured by a method in which the multilayered body 1 or 2 formed into a tube shape by a multilayer inflation method or the like is used, both end portions are heat-sealed to form the accommodation portion 31, the tube member is heat-sealed to a predetermined position at one end to produce the port portion 32 and a hanging portion is formed at the other end as necessary. The heat sealing at both end portion and the heat sealing of the tube member may be carried out at the same time or may be carried out by separate steps. The accommodation portion 31 may be formed by, instead of using a tubular multilayered body 1 or 2, using two multilayered bodies 1 or 2 manufactured by a multilayer T-die extrusion forming method or the like, overlapping the multilayered bodies and then heat-sealing the peripheral portions.

In the case of the film bag-type container, a tube-attached container may be produced using a tube instead of the port portion 32.

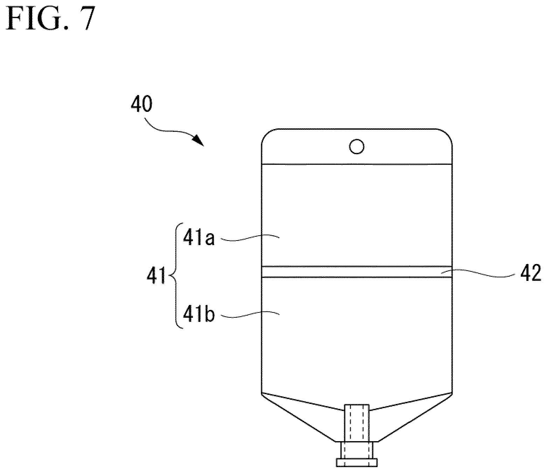

The form of the container is not limited to the form in which one accommodation portion 11, 21 or 31 is provided. For example, the container may be a multi-chamber container in which the accommodation portion is separated into a plurality of sections with communicable partition seal portions and a plurality of kinds of contents can be separately accommodated. Specifically, as shown in FIG. 7, the container may be a multi-chamber medical container 40 in which an accommodation portion 41 is separated into a plurality of sections with a communicable partition seal portion 42 and a plurality of kinds of liquid medicines can be separately accommodated.

In the multi-chamber medical container 40, the partition seal portion 42 is provided along the width direction of the accommodation portion 41 formed in a bag shape, and the accommodation portion 41 is divided into a first accommodation portion 41a and a second accommodation portion 41b. Regarding the partition seal portion 42, upon the use of the multi-chamber medical container 40, a user presses from the outside and thereby peels the first accommodation portion 41a or the second accommodation portion 41b, and a liquid medicine in the first accommodation portion 41a and a liquid medicine in the second accommodation portion 41b are mixed together.

A method for forming the partition seal portion 42 is not particularly limited. For example, the partition seal portion 42 can be formed by a well-known sealing method such as heat sealing or impulse sealing or by providing a mechanism for forming the partition seal portion 42 in a mold that is used during blow forming.

### [Examples]

Hereinafter, the present invention will be specifically described using examples, but the present invention is not limited to the following description.

### [Abbreviations of materials]

The abbreviations of materials used in the present examples will be shown below. "MFR" in the following description is the melt flow rate measured at a load of 21.18 N.
COP1: Cyclic polyolefin (trade name "ZEONEX 690R" manufactured by ZEON Corporation, MFR (280°C): 17 g/10 minutes, Tg: 136°C, density: 1.010 g/cm³)
COP2: Cyclic polyolefin (trade name "ZEONOR 1020R" manufactured by ZEON Corporation, MFR (280°C): 20 g/10 minutes, Tg: 102°C, density: 1.010 g/cm³)
S-LL-1: Single-site LLDPE (trade name "HARMOREX NM325N" manufactured by Japan Polyethylene Corporation, MFR (190°C): 0.9 g/10 minutes, density: 0.908 g/cm³)
S-LL-2: Single-site LLDPE (trade name "UMERIT 125FN" manufactured by Ube-Maruzen Polyethylene, MFR (190°C): 2.2 g/10 minutes, density: 0.924 g/cm³)
S-LL-3: Single-site LLDPE (trade name "UMERIT 0520F" manufactured by Ube-Maruzen Polyethylene, MFR (190°C): 2.0 g/10 minutes, density: 0.904 g/cm³)
HD-1: HDPE (trade name "NOVATEC HM4503" manufactured by Japan Polyethylene Corporation, MFR (190°C): 1.9 g/10 minutes, density: 0.962 g/cm³)
Z-LL-1: LLDPE produced using a Ziegler-Natta catalyst (trade name "NOVATEC UF332" manufactured by Japan Polyethylene Corporation, MFR (190°C): 1.0 g/10 minutes, density: 0.923 g/cm³)
Z-LL-2: LLDPE produced using a Ziegler-Natta catalyst (trade name "MORETEC 3500Z" manufactured by Prime Polymer Co., Ltd., MFR (190°C): 2.0 g/10 minutes, density: 0.923 g/cm³)
S-PP: Single-site random PP (trade name "WINTEC WF4TA, manufactured by Japan Polyethylene Corporation, MFR (230°C): 7.0 g/10 minutes, density: 0.900 g/cm³)
F-PP: Flexible PP (trade name "ZELAS MC617" manufactured by Mitsubishi Chemical Corporation, MFR (230°C): 1.5 g/10 minutes, density: 0.890 g/cm³) (an olefin-based elastomer and a styrene-based elastomer have been blended)
n-PP : PP produced using a Ziegler-Natta catalyst (trade name "EXCELLEN FH3471M" manufactured by Sumitomo Chemical Co., Ltd., MFR (230°C): 2.5 g/10 minutes, density: 0.898 g/cm³)
LD-1: LDPE (trade name "NOVATEC LM360" manufactured by Japan Polyethylene Corporation, MFR (190°C): 0.9 g/10 minutes, density: 0.928 g/cm³)

### [Example 1]

A container filled with 100 mL of water was manufactured as described below.

First, an accommodation portion 11, 21 or 31 made of a blow-formed article (multilayered body 1) of a three-layer structure in which a 30 µm-thick innermost layer 3, a 250 µm-thick intermediate layer 4 and a 20 µm-thick outer layer 5 were sequentially laminated and a port portion 12, 22 or 32 were integrally formed by a multilayer blow forming method in which a multilayer blow forming machine was used. For the innermost layer 3, a mixture of cyclic polyolefins obtained by blending COP1 and COP2 in a mass ratio of 1:1 was used. Only one Tg of these mixed cyclic polyolefins was observed and was 119°C. For the intermediate layer 4, a blend of S-LL-1 and HD-1 in a mass ratio of 8:2 was used. For the outer layer 5, S-PP was used.

Next, the accommodation portion 11, 21 or 31 was filled with 100 mL of water from the port portion 12, 22 or 32, and a rubber stopper was fused with the port portion with ultrasonic waves to seal the container. As the rubber stopper, an assembled rubber stopper obtained by inserting a chlorinated butyl rubber stopper into a cyclic outer circumferential portion formed by an injection forming method using COP1 was used.

On the sealed container, a high-pressure steam sterilization treatment was carried out with a high-pressure steam sterilization device at 123°C for 15 minutes.

### [Example 2]

A container was obtained in the same manner as in Example 1 except that F-PP was used for the outer layer 5.

### [Example 3]

A container was obtained in the same manner as in Example 2 except that only COP1 was used for the innermost layer 3.

### [Example 4]

A container was obtained in the same manner as in Example 2 except that only S-LL-2 was used for the intermediate layer 4 and an injection-formed article obtained using S-LL-2 used for the intermediate layer 4 was used as the outer circumferential portion of the rubber stopper.

### [Example 5]

A container was obtained in the same manner as in Example 1 except that a blend of S-LL-3 and HD-1 in a mass ratio of 8:2 was used for the intermediate layer 4 and an injection-formed article obtained using COP1 was used as the outer circumferential portion of the rubber stopper.

### [Example 6]

A container filled with 100 mL of water was manufactured as described below.

First, a blown film (multilayered body 1) made up of three layers of a 20 µm-thick innermost layer 3, a 220 µm-thick intermediate layer 4 and a 20 µm-thick outer layer 5 sequentially laminated together was manufactured by a multilayer inflation method in which a water-cooled multilayer blown film forming machine was used. The composition of each layer was set to be the same as that in Example 1.

Next, both end portions of this blown film were heat-sealed to form a bag shape, a tube member that was an injection-formed article of COP1 was heat-sealed to one end, and a port portion 12, 22 or 32 was formed in a film bag-type accommodation portion. In addition, the accommodation portion was filled with 100 mL of water from the port portion 12, 22 or 32, and then a rubber stopper was fused to the port portion 12, 22 or 32 with ultrasonic waves to seal a container. As the rubber stopper, an assembled rubber stopper obtained by inserting a chlorinated butyl rubber stopper into a cyclic outer circumferential portion formed by an injection forming method using COP1 was used.

On the sealed container, a high-pressure steam sterilization treatment was carried out with a high-pressure steam sterilization device at 123°C for 15 minutes.

### [Example 7]

A container was obtained in the same manner as in Example 6 except that F-PP was used for the outer layer 5.

### [Example 8]

A container was obtained in the same manner as in Example 7 except that only COP1 was used for the innermost layer 3.

### [Example 9]

A container was obtained in the same manner as in Example 7 except that only S-LL-2 was used for the intermediate layer 4.

### [Example 10]

A container was obtained in the same manner as in Example 6 except that a blend of S-LL-3 and HD-1 in a mass ratio of 8:2 was used for the intermediate layer 4.

### [Example 11]

A container filled with 100 mL of water was manufactured as described below.

First, a blown film (multilayered body 2) made up of four layers of a 10 µm-thick innermost layer 3, a 200 µm-thick intermediate layer 4, a 20 µm-thick outer layer 5 and a 20 µm-thick outermost layer 6 sequentially laminated together was manufactured by a multilayer inflation method in which a water-cooled multilayer blown film forming machine was used. For the innermost layer 3, a mixture of cyclic polyolefins obtained by blending COP1 and COP2 in a mass ratio of 1:1 was used. Only one Tg of these mixed cyclic polyolefins was observed and was 119°C. For the intermediate layer 4, a blend of S-LL-1 and HD-1 in a mass ratio of 8:2 was used. For the outer layer 5, S-PP was used. For the outermost layer 6, n-PP was used.

Next, a container was obtained in the same manner as in Example 6 using this blown film. On the sealed container, a high-pressure steam sterilization treatment was carried out with a high-pressure steam sterilization device at 123°C for 15 minutes.

### [Example 12]

A container was obtained in the same manner as in Example 11 except that F-PP was used for the outer layer 5.

### [Comparative Example 1]

A container was obtained in the same manner as in Example 1 except that only Z-LL-1 was used for the intermediate layer 4.

### [Comparative Example 2]

A container was obtained in the same manner as in Example 1 except that only Z-LL-2 was used for the intermediate layer 4.

### [Comparative Example 3]

A container was obtained in the same manner as in Example 2 except that only Z-LL-2 was used for the intermediate layer 4.

### [Comparative Example 4]

A container was obtained in the same manner as in Example 1 except that HD-1 was used for the outer layer 5.

### [Comparative Example 5]

A container was obtained in the same manner as in Example 1 except that a blend of HD-1 and LD-1 in a mass ratio of 3:7 was used for the outer layer 5.

### [Comparative Example 6]

A container was obtained in the same manner as in Example 6 except that only Z-LL-1 was used for the intermediate layer 4.

### [Comparative Example 7]

A container was obtained in the same manner as in Example 6 except that only Z-LL-2 was used for the intermediate layer 4.

### [Comparative Example 8]

A container was obtained in the same manner as in Example 7 except that only Z-LL-2 was used for the intermediate layer 4.

### [Comparative Example 9]

A container was obtained in the same manner as in Example 6 except that HD-1 was used for the outer layer 5.

### [Comparative Example 10]

A container was obtained in the same manner as in Example 6 except that a blend of HD-1 and LD-1 in a mass ratio of 3:7 was used for the outer layer 5.

### [Comparative Example 11]

A container was obtained in the same manner as in Example 9 except that n-PP was used for the outer layer 5.

The compositions (mass fractions) of the individual layers, the rubber stoppers and the port portions of the multilayered bodies 1 of Examples 1 to 10 and Comparative Examples 1 to 11 are shown in Table 1 and Table 2. The compositions (mass fractions) of the individual layers, the rubber stoppers and the port portions of the multilayered bodies 2 of Examples 11 and 12 are shown in Table 3. In Tables 1 to 3, "10" indicating the composition (mass fraction) means that only that component is used in each layer, the rubber stopper or the port portion of the multilayered body 1 or 2. That is, "10" indicating the composition (mass fraction) means that, as the component of each layer, the rubber stopper or the port portion of the multilayered body 1 or 2, only the component corresponding to the cell in which the composition (mass fraction) of "10" is shown is used.

In the examples and the comparative examples, the blocking resistance was evaluated only in the case of examples where the accommodation portion 11, 21, 31 or 41 was formed by the forming of a film and was not evaluated in cases where the accommodation portion 11, 21, 31 or 41 was formed by multilayer blow forming in the same manner as Example 1.

**[Table 1]**

| | | EXAMPLE | | | | | | | | | |
|---|---|---|---|---|---|---|---|---|---|---|---|
| | | 1 | 2 | 3 | 4 | 5 | 6 | 7 | a | 9 | 10 |
| INNERMOST LAYER | COP1 | 5 | 5 | 10 | 5 | 5 | 5 | 5 | 10 | 5 | 5 |
| | COP2 | 5 | 5 | | 5 | 5 | 5 | 5 | | 5 | 5 |
| INTERMEDIATE LAYER | S-LL-1 | 8 | 8 | 8 | | | 8 | 8 | a | | |
| | S-LL-2 | | | | 10 | | | | | 10 | |
| | S-LL-3 | | | | | 8 | | | | | 8 |
| | HD-1 | 2 | 2 | 2 | | 2 | 2 | 2 | 2 | | 2 |
| | Z-LL-1 | | | | | | | | | | |
| | Z-LL-2 | | | | | | | | | | |
| OUTER LAYER | S-PP | 10 | | | | 10 | 10 | | | | 10 |
| | F-PP | | 10 | 10 | 10 | | | 10 | 10 | 10 | |
| | n-PP | | | | | | | | | | |
| | HD-1 | | | | | | | | | | |
| | LD-1 | | | | | | | | | | |
| RUBBER STOPPER | COP 1 | 10 | 10 | 10 | | 10 | 10 | 10 | 10 | 10 | 10 |
| | S-LL-2 | | | | 10 | | | | | | |
| PORT PORTION | COP1 | | | | | | 10 | 10 | 10 | 10 | 10 |

**[Table 2]**

| | | COMPARATIVE EXAMPLE | | | | | | | | | | |
|---|---|---|---|---|---|---|---|---|---|---|---|---|
| | | 1 | 2 | 3 | 4 | 5 | 6 | 7 | 8 | 9 | 10 | 11 |
| INNERMOST LAYER | COP1 | 5 | 5 | 5 | 5 | 5 | 5 | 5 | 5 | 5 | 5 | 5 |
| | COP2 | 5 | 5 | 5 | 5 | 5 | 5 | 5 | 5 | 5 | 5 | 5 |
| INTERMEDIATE LAYER | S-LL-1 | | | | 8 | 8 | | | | 8 | 8 | 8 |
| | S-LL-2 | | | | | | | | | | | |
| | S-LL-3 | | | | | | | | | | | |
| | HD-1 | | | | 2 | 2 | | | | 2 | 2 | 2 |
| | Z-LL-1 | 10 | | | | | 10 | | | | | |
| | Z-LL-2 | | 10 | 10 | | | | 10 | 10 | | | |
| OUTER LAYER | S-PP | 10 | 10 | | | | 10 | 10 | | | | |
| | F-PP | | | 10 | | | | | 10 | | | |
| | n-PP | | | | | | | | | | | 10 |
| | HD-1 | | | | 10 | 3 | | | | 10 | 3 | |
| | LD-1 | | | | | 7 | | | | | 7 | |
| RUBBER STOPPER | COP1 | 10 | 10 | 10 | 10 | 10 | 10 | 10 | 10 | 10 | 10 | 10 |
| | S-LL-2 | | | | | | | | | | | |
| PORT PORTION | COP1 | | | | | | 10 | 10 | 10 | 10 | 10 | 10 |

**[Table 3]**

| | | EXAMPLE 11 | EXAMPLE 12 |
|---|---|---|---|
| INNERMOST LAYER | COP1 | 5 | 5 |
| | COP2 | 5 | 5 |
| INTERMEDIATE LAYER | S-LL-1 | 8 | 8 |
| | HD-1 | 2 | 2 |
| OUTER LAYER | S-PP | 10 | |
| | F-PP | | 10 |
| OUTERMOST LAYER | n-PP | 10 | 10 |
| RUBBER STOPPER | COP1 | 10 | 10 |
| PORT PORTION | COP1 | 10 | 10 |

### [Evaluation methods]

Regarding the container obtained in each example, evaluation was carried out as described below.

### (1) Forming stability

In the blow forming, the shape stability of the parison during the forming and the status of a thickness unevenness after the forming were evaluated with the following standards.
A: The parison shape is stable. In the blow-formed container, no portions with an extremely thin thickness are found.
B: The parison shape is almost stable. In the blow-formed container, a portion with a slightly thin thickness is found.
C: The parison shape is unstable and undergoes drawdown. In the blow-formed container, a portion with an extremely thin thickness is found.

In the water-cooled blown film formation, the shape stability of a tube-like film (bubble) during the forming and the status of wrinkles generated in the film after the forming were evaluated with the following standards.
A: The tube shape is constant and stable. The tube diameter is constant.
B: The tube shape is almost stable. The tube diameter is almost constant. Wrinkles are partially found in the film.
C: The tube shape is unstable. The tube diameter varies. Wrinkles are found in the film.

### (2) Blocking resistance

Two test pieces having horizontal and vertical dimensions of 10 cm × 10 cm cut out from the container of each example were overlapped so that the outer layers came into contact with each other and held at 60°C for 24 hours with a load of 98 N/100 cm² added thereon. After that, the test pieces were naturally cooled to room temperature, the load was removed, and the two test pieces were then peeled off from each other. The state of peeling at this time was evaluated by the following two stages.
A: The test pieces are easily peeled off.
C: There is resistance to peeling.

### (3) Sticking to sterilization tray

The container of each example was placed on a perforated metal tray (sterilization tray) having round holes, and high-pressure steam sterilization was carried out thereon using a high-pressure steam sterilization device at a temperature in a sterilization chamber set to 123°C for a sterilization time set to 15 minutes. Whether or not the container adhered to the perforated metal tray of the sterilization device after this high-pressure steam sterilization was evaluated with the following standards. The material of the perforated metal tray was stainless steel.
A: The container does not adhere to the perforated metal tray.
B: The container seems to slightly adhere to the perforated metal tray, but is easily peeled off.
C: The container adheres to the perforated metal tray, and there is resistance to peeling.

### (4) Heat resistance

The appearance of the container after the high-pressure steam sterilization was confirmed and evaluated with the following standards.
A: The container does not deform or shrink after the sterilization.
B: Rough parts, wrinkles or the like are locally found on the surface, and the container slightly shrinks.
C: The container significantly deforms or shrinks, and round hole-like tray marks are clearly found.

### (5) Peel strength

Strip-like samples having a width of 15 mm were cut out from the container before and after the high-pressure steam sterilization, and the T peel strength according to JIS K 6854-3 between the intermediate layer and the outer layer was measured at a tensile rate of 300 mm/minute. The test was carried out with a tensile tester.

### (6) Transparency

The haze after the high-pressure steam sterilization was measured according to JIS K 7136.

Evaluation results of each example are shown in Table 4.

**[Table 4]**

| | FORMING STABILITY | BLOCKING RESISTANCE | STICKING TO STERILIZATION TRAY (AFTER STERILIZATION) | HEAT RESISTANCE (AFTER STERILIZATION) | PEEL STRENGTH [N/15 MM] | | HAZE (AFTER STERILIZATION) [%] |
|---|---|---|---|---|---|---|---|
| | | | | | BEFORE STERILIZATION | AFTER STERILIZATION | |
| EXAMPLE 1 | B | - | B | A | DO NOT PEEL | DO NOT PEEL | 23 |
| EXAMPLE 2 | A | - | A | A | DO NOT PEEL | DO NOT PEEL | 26 |
| EXAMPLE 3 | B | - | A | A | DO NOT PEEL | DO NOT PEEL | 25 |
| EXAMPLE 4 | B | - | A | A | DO NOT PEEL | DO NOT PEEL | 22 |
| EXAMPLE 5 | B | - | B | A | DO NOT PEEL | DO NOT PEEL | 18 |
| EXAMPLE 6 | B | A | B | A | DO NOT PEEL | DO NOT PEEL | 12 |
| EXAMPLE 7 | A | A | A | A | DO NOT PEEL | DO NOT PEEL | 14 |
| EXAMPLE 8 | B | A | A | A | DO NOT PEEL | DO NOT PEEL | 13 |
| EXAMPLE 9 | B | A | A | A | DO NOT PEEL | DO NOT PEEL | 16 |
| EXAMPLE 10 | A | A | A | A | DO NOT PEEL | DO NOT PEEL | 14 |
| EXAMPLE 11 | A | A | A | A | DO NOT PEEL | DO NOT PEEL | 13 |
| EXAMPLE 12 | A | A | A | A | DO NOT PEEL | DO NOT PEEL | 12 |
| COMPARATIVE EXAMPLE 1 | B | - | B | A | 10 | 5 | 25 |
| COMPARATIVE EXAMPLE 2 | B | - | B | A | 16 | 8 | 22 |
| COMPARATIVE EXAMPLE 3 | A | - | A | A | 15 | 7 | 22 |
| COMPARATIVE EXAMPLE 4 | A | - | C | A | DO NOT PEEL | DO NOT PEEL | 31 |
| COMPARATIVE EXAMPLE 5 | A | - | C | C | DO NOT PEEL | DO NOT PEEL | 29 |
| COMPARATIVE EXAMPLE 6 | A | A | B | A | 9 | 3 | 23 |
| COMPARATIVE EXAMPLE 7 | A | A | B | A | 15 | 6 | 20 |
| COMPARATIVE EXAMPLE 8 | A | A | A | A | 15 | 7 | 21 |
| COMPARATIVE EXAMPLE 9 | A | A | C | A | DO NOT PEEL | DO NOT PEEL | 25 |
| COMPARATIVE EXAMPLE 10 | A | A | C | C | DO NOT PEEL | DO NOT PEEL | 24 |
| COMPARATIVE EXAMPLE 11 | A | A | A | A | 10 | 4 | 20 |

As shown in Table 4, in Examples 1 to 12 where the multilayered body 1 or 2 including the innermost layer 3 made of the cyclic polyolefin, the intermediate layer 4 containing the single-site LLDPE as a main component and the outer layer 5 made of one of the single-site random PP or the flexible PP was used, the heat resistance was excellent, and a disadvantage such as a decrease in the peel strength, the sticking to the sterilization tray or the generation of wrinkles or the occurrence of deformation was suppressed even when the sterilization treatment was carried out. In addition, in Examples 1 to 12, the forming stability and the blocking resistance were also excellent, and sufficient transparency was secured even after the sterilization.

On the other hand, in Comparative Examples 1 to 3 and 6 to 8 where the single-site LLDPE was not used for the intermediate layer 4, the peel strengths between the intermediate layer 4 and the outer layer 5 were low, and, when the sterilization treatment was carried out, the peel strengths further decreased. In Comparative Examples 4, 5, 9 and 10 where the single-site random pp or the flexible PP was not used but HDPE or LDPE was used for the outer layer 5, the sticking to the sterilization tray was not sufficiently suppressed. In addition, in Comparative Example 11 where the single-site random pp or the flexible PP was not used but PP produced with a Ziegler-Natta catalyst was used for the outer layer 5, the peel strength between the intermediate layer 4 and the outer layer 5 was low, and, when the sterilization treatment was carried out, the peel strength further decreased.

When Example 1 and Comparative Examples 1 and 2 are compared, it was confirmed that, compared with a case where LLDPE produced with a Ziegler-Natta catalyst was used for the intermediate layer 4, the use of the single-site LLDPE for the intermediate layer 4 brought about improvement such as an increase in the adhesion strength (peel strength) between the intermediate layer 4 and the outer layer 5 and, furthermore, a sufficient peel strength being maintained even after the sterilization treatment. The same thing was also confirmed from the comparison between Examples 2 and 4 and Comparative Example 3.

When Examples 1 to 3 and Comparative Examples 4 and 5 are compared, it was confirmed that, compared with a case where HDPE or LDPE was used for the outer layer 5, when the single-site random PP or the flexible PP was used for the outer layer 5, the sticking to the sterilization tray was significantly reduced. The same thing was also confirmed from the comparison between Examples 6 to 10 and Comparative Examples 6 to 10.

### [Industrial Applicability]

According to the present invention, it is possible to provide a container multilayered body that has excellent heat resistance and is capable of suppressing a disadvantage during a sterilization treatment and a container, particularly, a medical container and a drug-containing medical container, in which the container multilayered body is used.

### [Reference Signs List]

1, 2 Container multilayered body
3 Innermost layer
4 Intermediate layer
5 Outer layer
6 Outermost layer
10, 20, 30 Medical container
11, 21, 31 Accommodation portion
12, 22, 32 Port portion
40 Multi-chamber medical container
41 Accommodation portion
42 Partition seal portion

## Claims

1. A container multilayered body that is used to form a container, comprising:
an innermost layer made of a cyclic polyolefin;
an intermediate layer that is formed so as to be adjacent to the innermost layer and contains a linear low-density polyethylene produced using a single-site catalyst as a main component; and
an outer layer made of one of a random polypropylene produced using a single-site catalyst or a polypropylene containing an elastomer.

2. The container multilayered body according to Claim 1, further comprising:
an outermost layer made of a polypropylene on an outer side of the outer layer.

3. The container multilayered body according to Claim 1 or 2,
wherein the cyclic polyolefin is a hydrogenated product of a ring-opened polymer of a cyclic olefin monomer.

4. The container multilayered body according to any one of Claims 1 to 3,
wherein the elastomer is an olefin-based elastomer or/and a styrene-based elastomer.

5. A container, comprising:
an accommodation portion that accommodates contents,
wherein at least the accommodation portion is made of the container multilayered body according to any one of Claims 1 to 4.

6. A medical container, comprising:
an accommodation portion that accommodates a liquid medicine,
wherein at least the accommodation portion is made of the container multilayered body according to any one of Claims 1 to 4.

7. A drug-containing medical container,
wherein a drug is accommodated in the medical container according to Claim 6.
